(19) Europäisches Patentamt
European Patent Office
Office européen des brevets

(11) Publication number: **0 591 519 B1**

(12) # EUROPEAN PATENT SPECIFICATION

(45) Date of publication of patent specification: **20.09.95**

(51) Int. Cl.6: **B41M 5/26**, G11B 7/24, C09B 67/22

(21) Application number: **93912333.7**

(22) Date of filing: **21.04.93**

(86) International application number: **PCT/US93/03761**

(87) International publication number: **WO 93/22142 (11.11.93 93/27)**

(54) **STABILIZERS FOR CYANINE IR DYES.**

(30) Priority: **23.04.92 US 872872**
**19.03.93 US 35105**

(43) Date of publication of application: **13.04.94 Bulletin 94/15**

(45) Publication of the grant of the patent: **20.09.95 Bulletin 95/38**

(84) Designated Contracting States: **BE CH DE FR GB IT LI NL**

(56) References cited:
**EP-A- 0 403 797**
**US-A- 4 973 572**
**US-A- 5 075 147**

(73) Proprietor: **EASTMAN KODAK COMPANY**
**343 State Street**
**Rochester,**
**New York 14650-2201 (US)**

(72) Inventor: **CHAPMAN, Derek, David**
**7 Andony Lane**
**Rochester, NY 14624 (US)**
Inventor: **KOVACS, Csaba, Andras**
**106 Oakridge Drive**
**Rochester, NY 14617 (US)**

(74) Representative: **Brandes, Jürgen, Dr.**
**Wuesthoff & Wuesthoff**
**Patent- und Rechtsanwälte**
**Schweigerstrasse 2**
**D-81541 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

This invention relates to the use of stabilizers for cyanine infrared dyes in various compositions and elements, such as the donor element of a laser-induced thermal dye transfer system and optical recording elements

In recent years, thermal transfer systems have been developed to obtain prints from pictures which have been generated electronically from a color video camera. According to one way of obtaining such prints, an electronic picture is first subjected to color separation by color filters. The respective color-separated images are then converted into electrical signals. These signals are then operated on to produce cyan, magenta and yellow electrical signals. These signals are then transmitted to a thermal printer. To obtain the print, a cyan, magenta or yellow dye-donor element is placed face-to-face with a dye-receiving element. The two are then inserted between a thermal printing head and a platen roller. A line-type thermal printing head is used to apply heat from the back of the dye-donor sheet. The thermal printing head has many heating elements and is heated up sequentially in response to the cyan, magenta or yellow signal. The process is then repeated for the other two colors. A color hard copy is thus obtained which corresponds to the original picture viewed on a screen. Further details of this process and an apparatus for carrying it out are contained in U.S. patent 4,621,271.

Another way to thermally obtain a print using the electronic signals described above is to use a laser instead of a thermal printing head.

In U.S. Patent 4,973,572, there is described a dye-donor element for laser-induced thermal dye transfer comprising a dye layer containing a cyanine infrared absorbing material. There is a problem with these infrared materials in that their stability to light is not as good as one would desire.

It is also known to use cyanine dyes in optical recording elements. In such elements, a layer of dye is deposited on the surface of a transparent substrate without a binder. The dye layer can then be overcoated with a reflective layer and then protective layers. It has become desirable to create such an optical recording element that mimics compact disk standards, widely known as "CDs". Cyanine dyes have been used for optical recording purposes to mimic CDs.

In European Patent Application 0 403 797, there is disclosed the use of an aryl nitrogen compound, such as a nitrosophenol or a nitrosonaphthol to stabilize the cyanine dye in a recordable optical element. However, the stability that the aryl nitrogen compounds provides is less than desired as will be seen in the comparative examples presented below.

There is a continuing need therefore, for compounds which can stabilize cyanine dyes. Such stabilizers would be valuable, for example, in the both thermal transfer donor elements and in optical recording elements. It is therefore an object of this invention to provide a stabilizer for cyanine infrared dyes.

These and other objects are achieved in accordance with this invention which relates to a composition comprising a cyanine infrared absorbing dye and a nitrosonaphthol or nitrosophenol ferrous complex associated therewith.

Any nitrosonaphthol or nitrosophenol ferrous complex may be employed in the invention. In a preferred embodiment, the nitrosonaphthol or nitrosophenol-ferrous complex has the following formula:

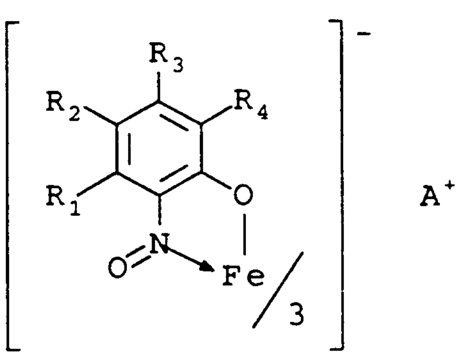

wherein:

wherein each of $R_1$-$R_4$ independently represents hydrogen; alkyl or alkoxy having from 1 to 4 carbon atoms; acetamido; nitro; sulfo; or, taken together with an adjacent R group represents the atoms necessary to complete a fused, substituted or unsubstituted aromatic ring; with the proviso that all R groups can not be hydrogen at the same time; and

A represents a cation, such as ammonium, tetraalkyl ammonium, an alkali metal, 1-alkyl pyridinium, etc.

In another preferred embodiment of the invention, A represents tetraalkyl ammonium, $R_1$ taken together with $R_2$ represent the atoms necessary to provide a fused naphthol ring, and $R_4$ represents methoxy or acetamido. In another preferred embodiment, A represents tetraalkyl ammonium, and either $R_1$-$R_2$ or $R_3$-$R_4$ represents the atoms necessary to provide a fused naphthol ring.

Following are examples of the stabilizer complexes which may be employed in the invention:

Stabilizer S-1

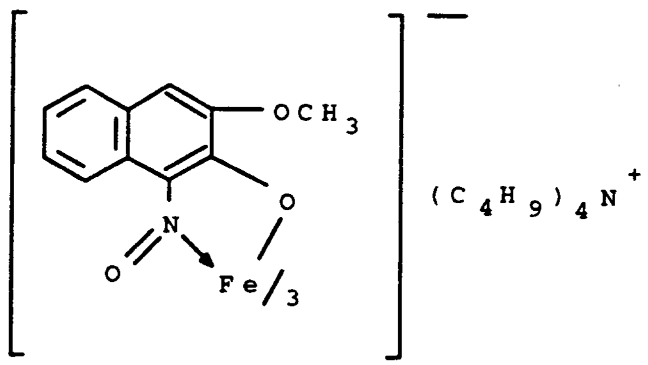

Stabilizer S-2

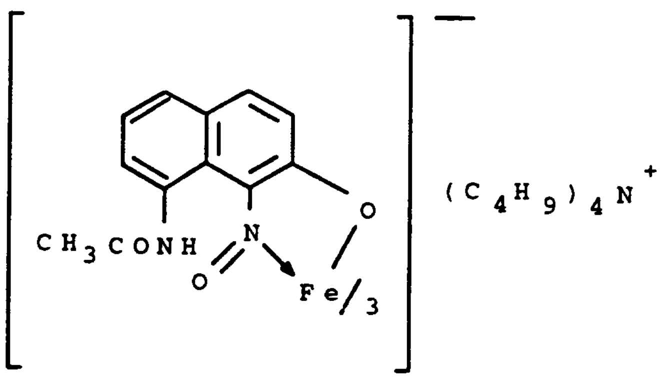

Stabilizer S-3

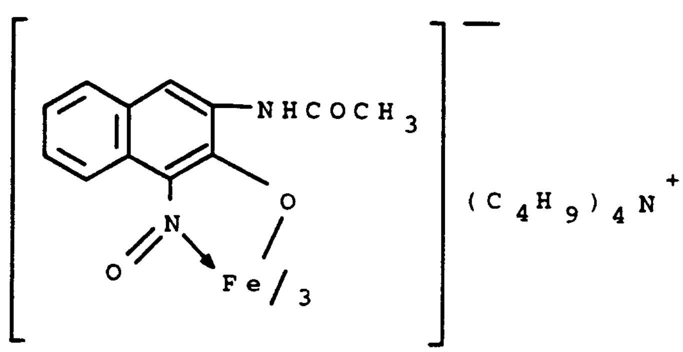

Stabilizer S-4

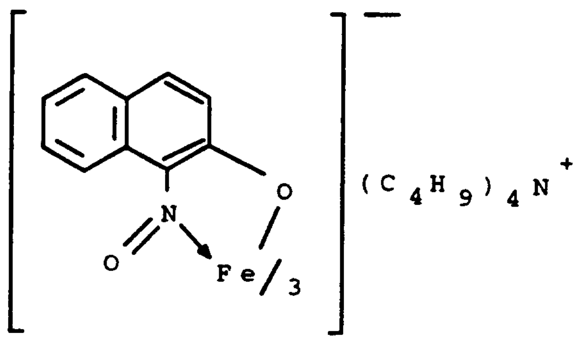

Stabilizer S-5

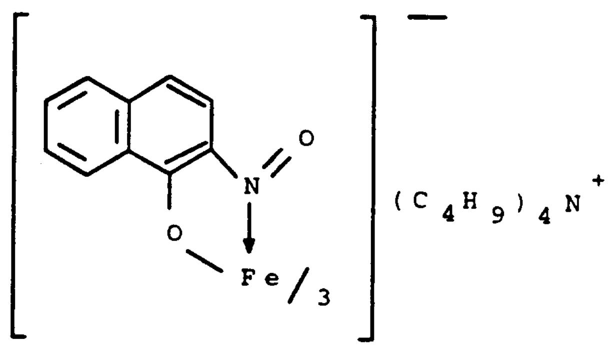

Stabilizer S-6

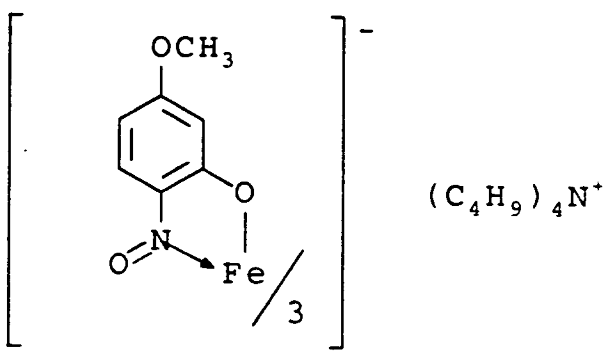

In a preferred embodiment of the invention, the cyanine infrared absorbing dye and the nitrosonaphthol or nitrosophenol ferrous complex are in a dye layer.

Typical examples of cyanine infrared absorbing dyes which may be used are disclosed in the above-referenced U.S. Patent 4,973,572. Specific examples of such cyanine infrared absorbing dyes are as follows:

Cyanine Dye A1

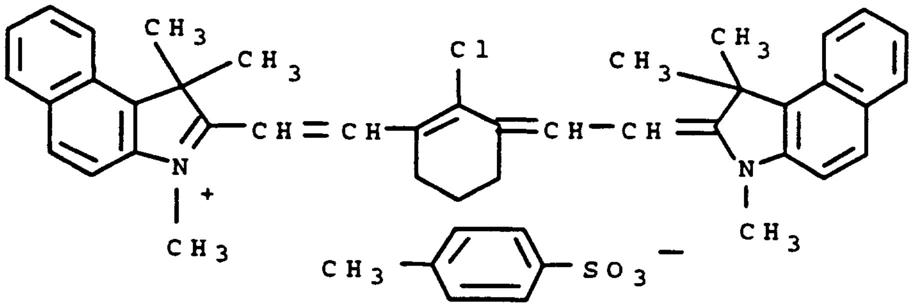

Cyanine Dye A2

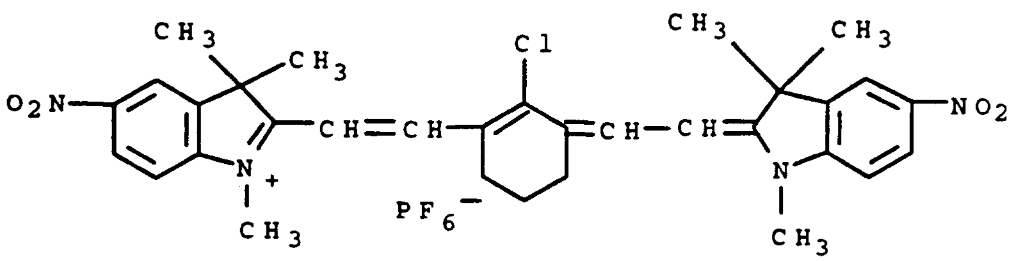

Cyanine Dye A3

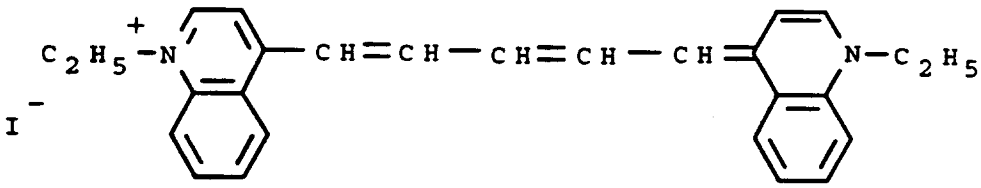

In another preferred embodiment of the invention, instead of the cations listed above for the cyanine dye, the nitrosonaphthol or nitrosophenol ferrous complex itself can be the counter ion for the cyanine dye.

To obtain the laser-induced thermal dye transfer image employed in the invention, a diode laser is preferably employed since it offers substantial advantages in terms of its small size, low cost, stability, reliability, ruggedness, and ease of modulation. Lasers which can be used to transfer dye from dye-donors employed in the invention are available commercially. There can be employed, for example, Laser Model SDL-2420-H2 from Spectra Diode Labs, or Laser Model SLD 304 V/W from Sony Corp.

A thermal printer which uses a laser as described above to form an image on a thermal print medium is described and claimed in EP-A-0 460 158 (= WO-A-9 108 905).

In a thermal dye transfer image donor element, there is also an image dye and a binder. Any image dye can be used in the dye-donor employed in the invention provided it is transferable to the dye-receiving layer by the action of the laser. Especially good results have been obtained with sublimable dyes such as anthraquinone dyes, e.g., Sumikalon Violet RS® (product of Sumitomo Chemical Co., Ltd.), Dianix Fast Violet 3R-FS® (product of Mitsubishi Chemical Industries, Ltd.), and Kayalon Polyol Brilliant Blue N-BGM® and KST Black 146® (products of Nippon Kayaku Co., Ltd.); azo dyes such as Kayalon Polyol Brilliant Blue BM®, Kayalon Polyol Dark Blue 2BM®, and KST Black KR® (products of Nippon Kayaku Co., Ltd.), Sumickaron Diazo Black 5G® (product of Sumitomo Chemical Co., Ltd.), and Miktazol Black 5GH® (product of Mitsui Toatsu Chemicals, Inc.); direct dyes such as Direct Dark Green B® (product of Mitsubishi Chemical Industries, Ltd.) and Direct Brown M® and Direct Fast Black D® (products of Nippon Kayaku Co. Ltd.); acid dyes such as Kayanol Milling Cyanine 5R® (product of Nippon Kayaku Co. Ltd.); basic dyes such as Sumicacryl Blue 6G® (product of Sumitomo Chemical Co., Ltd.), and Aizen Malachite Green® (product of Hodogaya Chemical Co., Ltd.);

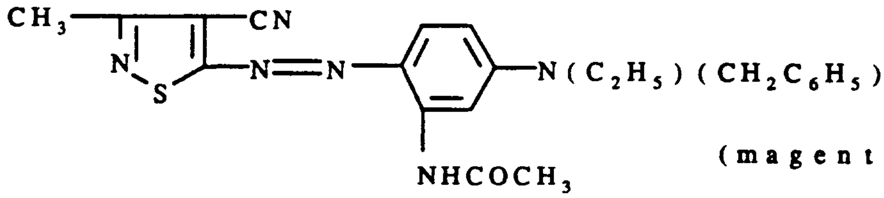

(magenta)

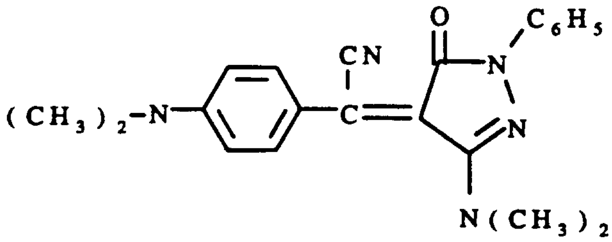

(magenta)

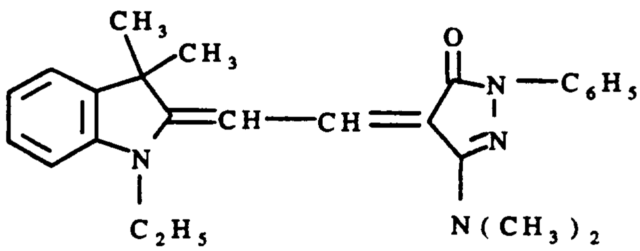

(yellow)

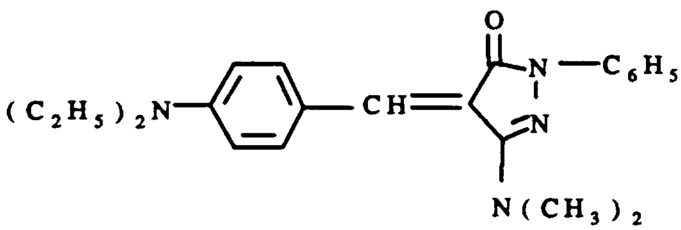

(yellow)

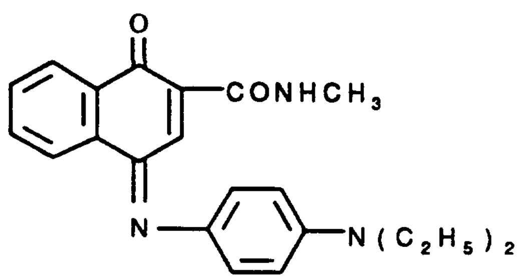

(cyan)

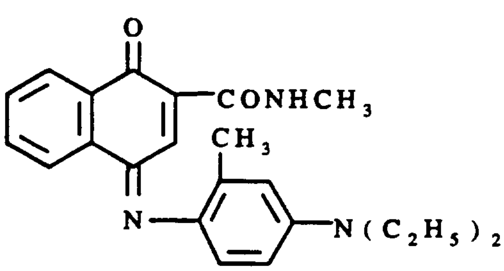

(cyan)

or any of the dyes disclosed in U.S. Patents 4,541,830, 4,698,651, 4,695,287, 4,701,439, 4,757,046, 4,743,582, 4,769,360, and 4,753,922. The above dyes may be employed singly or in combination. The dyes may be used at a coverage of from about 0.05 to about 1 g/$m^2$ and are preferably hydrophobic.

In the thermal dye transfer image donor element, the dye is dispersed in a polymeric binder such as a cellulose derivative, e.g., cellulose acetate hydrogen phthalate, cellulose acetate, cellulose acetate propionate, cellulose acetate butyrate, cellulose triacetate or any of the materials described in U. S. Patent 4,700,207; a polycarbonate; polyvinyl acetate, poly(styrene-co-acrylonitrile), a poly(sulfone) or a poly-

(phenylene oxide). The binder may be used at a coverage of from about 0.1 to about 5 $g/m^2$.

The dye layer of the thermal dye transfer image donor element element may be coated on the support or printed thereon by a printing technique such as a gravure process.

Any material can be used as the support for the dye-donor element employed in the invention provided it is dimensionally stable and can withstand the heat of the laser. Such materials include polyesters such as poly(ethylene terephthalate); polyamides; polycarbonates; cellulose esters such as cellulose acetate; fluorine polymers such as polyvinylidene fluoride or poly(tetrafluoroethylene-cohexafluoropropylene); polyethers such as polyoxymethylene; polyacetals; polyolefins such as polystyrene, polyethylene, polypropylene or methylpentane polymers; and polyimides such as polyimide-amides and polyether-imides. The support generally has a thickness of from about 5 to about 200 um. It may also be coated with a subbing layer, if desired, such as those materials described in U. S. Patents 4,695,288 or 4,737,486.

The dye-receiving element that is used with the dye-donor element employed in the invention comprises a support having thereon a dye image-receiving layer. The support may be glass or a transparent film such as a poly(ether sulfone), a polyimide, a cellulose ester such as cellulose acetate, a poly(vinyl alcohol-co-acetal) or a poly(ethylene terephthalate). The support for the dye-receiving element may also be reflective such as baryta-coated paper, white polyester (polyester with white pigment incorporated therein), an ivory paper, a condenser paper or a synthetic paper such as duPont Tyvek®. In a preferred embodiment, a transparent film support is employed.

The dye image-receiving layer may comprise, for example, a polycarbonate, a polyurethane, a polyester, polyvinyl chloride, poly(styrene-co-acrylonitrile), poly(caprolactone) or mixtures thereof. The dye image-receiving layer may be present in any amount which is effective for the intended purpose. In general, good results have been obtained at a concentration of from about 1 to about 5 $g/m^2$.

A process of forming a laser-induced thermal dye transfer image according to the invention comprises:

a) contacting at least one dye-donor element comprising a support having thereon a dye layer comprising an image dye in a polymeric binder having an infrared absorbing material associated therewith, with a dye-receiving element comprising a support having thereon a polymeric dye image-receiving layer;

b) imagewise-heating the dye-donor element by means of a laser; and

c) transferring a dye image to the dye-receiving element to form the laser-induced thermal dye transfer image,

and wherein the dye-donor element contains a nitrosonaphthol or nitrosophenol ferrous complex as described above.

In another embodiment, the cyanine dye containing layer is part of a recordable optical element. Such an element includes a cyanine dye layer that does not have an associated image dye nor a binder. Useful cyanine dyes for this embodiment are described in the European Patent Application 0 403 797 described above. Typical dyes are:

CD-1

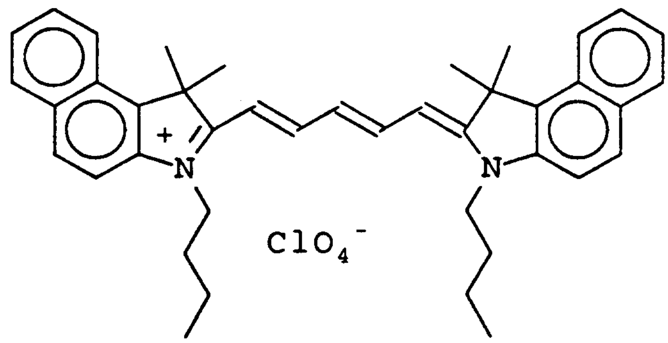

CD-2

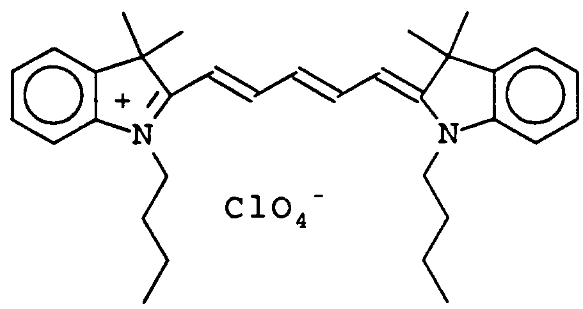

The optical information recording medium comprises a light transmitting, typically pregrooved substrate, the cyanine dye-stabilizer composition described herein as the absorptive layer overlaying the substrate, a light reflective layer overlaying the light absorptive layer and a protective layer overlaying the light reflective layer. The recording process will produce marks of lower reflectivity than the unmarked areas of the disk when written and read with a diode laser emitting between 770 and 800 nm. It is preferred that the real part of the complex refractive index (N) of the unwritten light absorptive layer measured with 780 nm light source is not less than 1.8 and and the imaginary part (k) is not greater than 0.15.

The substrate may be any transparent material that satisfies the mechanical and optical requirements. The substrate is generally pregrooved with groove depths from 20 nm to 250 nm, groove widths 0.2 to 1 $\mu$m and a pitch 1 to 2$\mu$m. The preferred material is polycarbonate, other useful materials are glass, polymethylmethacrylate and other suitable polymeric materials.

The preparation of the optical recording element of the invention is achieved by spin coating of the cyanine dye-stabilizer composition by itself, or with another dye or dyes or with addenda, from a suitable solvent onto a transparent substrate. For coating, the stabilized cyanine dye composition with or without addenda is dissolved in a suitable solvent so that the dye is 20 or less parts by weight to 100 parts of solvent by volume. The dye recording layer of the element is then overcoated with a metal reflective layer under reduced pressure by resistive heating or a sputter method and finally overcoated with a protective resin.

Coating solvents for the dye recording layer are selected to minimize their effect on the substrate. Useful solvents include as alcohols, ethers, hydrocarbons, hydrocarbon halides, cellosolves, ketones. Examples of solvents are methanol, ethanol, propanol, pentanol, 2,2,3,3-tetrafluoropropanol, tetrachloroethane, dichloromethane, diethyl ether, dipropyl ether, dibutyl ether, methyl cellosolve, ethyl cellosolve, 1-methyl-2-propanol, methy ethyl ketone, 4-hydroxy-4-methyl-2-pentanone, hexane, cyclohexane, ethylcyclohexane, octane, benzene, toluene, and xylene. Other less desirable solvents include water and dimethylsulfoxide. Preferred solvents are hydrocarbon solvents and alcohol solvents since they have the least effect on the preferred polycarbonate substrates. Mixtures of solvents can also be used.

Useful addenda for the recording layer, in addition to the described stabilizers, include surfactants, binders and diluents.

The reflective layer can be any of the metals conventionally used for optical recording materials. Useful metals can be vacuum evaporated or sputtered and include gold, silver, aluminium and copper and alloys thereof.

The protective layer over the reflective layer is similarly conventional for this art. Useful materials include UV curable acrylates.

An intermediate layer, to protect the metal layer from oxidation, can also be present.

The element of the invention can have prerecorded ROM areas as described in United States Patent 4,940,618. The surface of the substrate can have a separate heat deformable layer as described in United States Patent 4,990,388. Other patents relating to recordable CD type elements are United States Patents 5,009,818; 5,080,946; 5,090,009; 4,577,291; 5,075,147; and 5,079,135.

The following examples are provided to illustrate the invention.

Synthesis Example 1-Nitrosonaphthol Ferrous Complex:

The ferrous complexes of nitrosonaphthols are not commercially available but some of the nitrosonaphthols themselves are. The synthesis of all the complexes is made in exactly the same way as follows:

The desired nitrosonaphthol (0.01 mol) is dissolved in tetrabutylammonium hydroxide (25 ml of 0.4M solution) and treated with a solution of ferrous chloride (0.7 g) in water (5 ml). The product is precipitated, filtered off, and washed with water. After drying in the oven, the product is purified by chromatography on silica gel.

Synthesis Example 2-IR Dye-Nitrosonaphthol Ferrous Complex:

The nitrosonaphthol or nitrosophenol ferrous complex may replace the anion of a given infrared absorbing dye to create a single complex of infrared dye and nitrosonaphthol or nitrosophenol ferrous complex stabilizer as the anion. This may be prepared as follows:

Infrared cyanine dye A1 (0.75 g) is dissolved in methanol (5. ml) and the nitrosonaphthol ferrous complex S4 (0.85 g), prepared as described above, is dissolved in methanol and added with stirring. The mixture is heated to boiling and the precipitated solid is filtered off and dried.

Example 1

Individual yellow dye-donor elements were prepared by coating on a 100 µm poly(ethylene terephthalate) support;

1) a subbing layer of poly(acrylonitrile-co-vinylidene chloride-co-acrylic acid) (0.054 g/m$^2$) (14:79:7 wt. ratio); and

2) a dye layer containing the yellow dye illustrated below (0.27 g/m$^2$), one of the cyanine infrared absorbing dyes illustrated above (0.054 g/m$^2$) as identified in Table 1, and one of the stabilizers illustrated above (0.054 g/m$^2$ or 0.11 g/m$^2$) as identified in Table 1, in a cellulose acetate propionate binder (2.5% acetyl, 45% propionyl) (0.27 g/m$^2$) coated from dichloromethane.

Control dye-donors without the stabilizer were also coated.

Yellow Dye

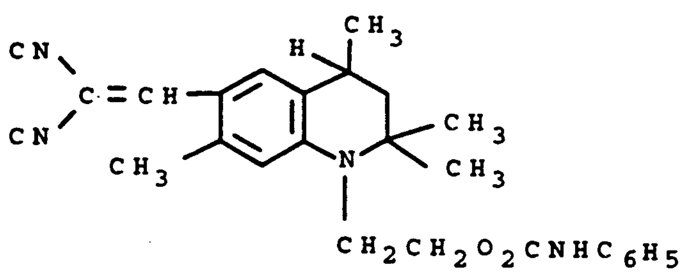

The spectral absorption curve of each coating was obtained by means of a spectrophotometer. Each coating was then exposed for two days at 22 °C to a 1 kLux fluorescence source. At the end of this time, the absorption curves of the samples were again read and the loss in transmission density at the wavelength maximum of the infrared dye was measured. The following results were obtained:

Table 1

| Donor with Yellow Dye | | Density at IR Max | | |
|---|---|---|---|---|
| IR Dye | Ferrous Stabilizer | Initial | After Fade | % Loss |
| A1 | None (control) | 0.89 | 0.32 | 64 |
| A1 | S1 (0.054 $g/m^2$) | 0.90 | 0.66 | 27 |
| A1 | S2 (0.054 $g/m^2$) | 0.86 | 0.63 | 27 |
| A1 | S3 (0.054 $g/m^2$) | 0.93 | 0.65 | 30 |
| A1 | S4 (0.054 $g/m^2$) | 0.89 | 0.70 | 21 |
| A1 | S5 (0.054 $g/m^2$) | 0.91 | 0.68 | 25 |
| A1* | S4* | 0.77 | 0.69 | 10 |
| A2 | None (control) | 1.02 | 0.60 | 42 |
| A2 | S4 (0.054 $g/m^2$) | 1.2 | 1.0 | 17 |
| A3 | None (control) | 0.65 | 0.14 | 79 |
| A3 | S4 (0.11 $g/m^2$) | 0.66 | 0.43 | 35 |

*This coating contained the infrared absorbing dye A1 with ferrous stabilizer S-4 as the anion (0.097 $g/m^2$)

The data above show that the light fade of a given cyanine infrared absorbing dye is minimized when coated with a ferrous nitrosonaphthol complex as a stabilizer in a laser thermal dye transfer donor.

Example 2:

This example is similar to Example 1 but contains a magenta imaging dye in the dye-donor rather than a yellow dye.

Dye donors were prepared as in Example 1 except the following magenta dye was used:

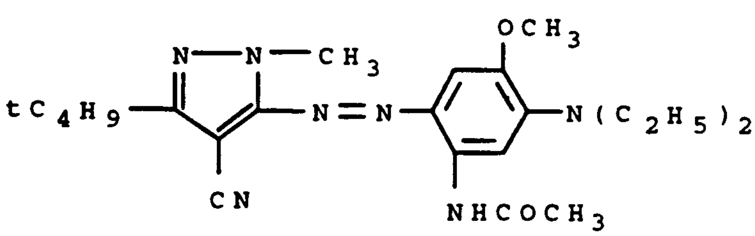

The evaluation procedure was the same as described in Example 1. The following results were obtained:

Table 2

| DONOR WITH MAGENTA DYE | | DENSITY AT IR MAX | | |
|---|---|---|---|---|
| IR DYE | FERROUS STABILIZER | INITIAL | AFTER FADE | % LOSS |
| A1 | None (control) | 0.75 | 0.39 | 48 |
| A1 | S4 (0.11 $g/m^2$) | 0.87 | 0.77 | 11 |
| A1* | S4* | 0.89 | 0.84 | 6 |

*This coating contained the infrared absorbing dye A1 with ferrous stabilizer S4 as the anion (0.097 $g/m^2$).

The data above show that the light fade of a given cyanine infrared absorbing dye is minimized when coated with a ferrous nitrosonaphthol complex as a stabilizer in a dye-donor containing a magenta imaging dye.

Example 3

A polycarbonate disc substrate having a thickness of 1.2 mm, an outer diameter of 120 mm and an inner diameter of 15 mm and having a spiral pregrooved formed on its surface with a width of 0.4 µm, and a depth of 0.08 µm and a pitch of 1.6 µm, was made by injection molding.

To form the light absorptive layer, 1.43 grams of CD-1, 0.64 grams of CD-2 and 0.43 grams of stabilizer was dissolved in 50 mL of diacetone alcohol. Then the solution was filtered through a 0.2 µm filter. The solution was coated on the surface of the substrate by spin coating to an optical density of 0.75 at 700 nm. It was dried at 80°C for 15 minutes.

Then a gold reflective layer was deposited by resistive heating on the entire surface of the disc to about 1200 A thickness.

To protect the gold layer, a lacquer (Daicure ™ SD-17) was applied by spin coating onto the gold layer to a thickness of 7 to 11 µm and it was UV cured with an "H" bulb using a fusion system cure at 300 W/inch power for 15 seconds.

To test the optical disc thus obtained a test system consisting of an optical head with a 785 nm laser, a 0.5 NA lens, phase tracking, and 1/2 aperture focusing was used. The optics used circularly polarized light to reduce laser feedback effects. Recording and play back were carried out with the same laser at 5.6 m/s rotational speed. The read power was kept at 0.6 mw. "Push-Pull", "Radial Contrast", "%Land Reflectance", "%Groove Reflectance", as those terms are defined in the CD standards, were measured at 45 mm radius. A CNR power series with I-11 marks were recorded and pictures of the signal shape at ORP (optimum recording power) and 2 mW above ORP and below ORP were taken. Then, a 1 mm band of a single frequency was recorded with a 3.56 micron mark length at ORP.

Disks were made with two different stabilizers. One, designated "Comparative Stabilizer" below, was a aryl nitrogen compound from European Patent Application 0 403 797, the other was "S-4" described above.

Comparative Stabilizer

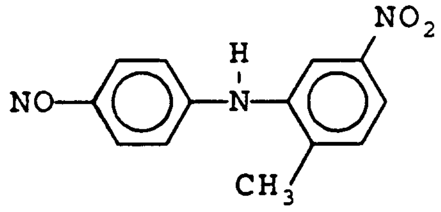

Stabilizer S-4

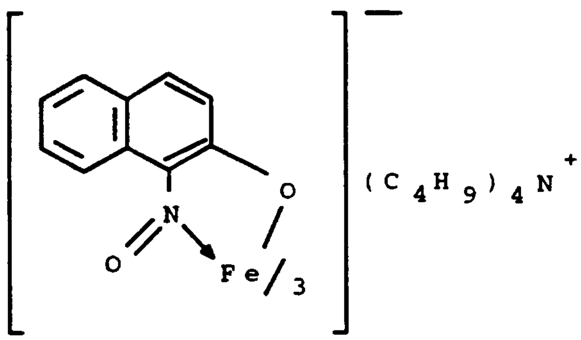

The coated disks were tested for various CD parameters after 0, 3, 6 and 16 days of exposure to 50 Klux Daylight as described more fully below. The disks with "Comparative Stablizer" were non functional after only three days exposure to these conditions while the disks stabilized with S-4 remained functional after 16 days.

Example 4

Various stabilizers with cyanine dyes CD-1 and CD-2 were spin coated on polycarbonate slides about 5 cm square. Optical density measurements were taken 5 mm from the edge on two opposite sides of the slides with a diode array spectrophotometer between 400 nm and 800 nm wave lengths. One measured side of the slide was covered and the slide was exposed through the polycarbonate for sixteen days to 50 Klux.

To calculate the percent optical density loss, the optical density after light exposure (AL) was substracted from the optical density before light exposure (BL). (The optical density was measured at the λmax.) The resulting value was divided by the optical density value before light exposure and multiplied by 100.

$$\%Loss = \left( \frac{BL - AL}{BL} X100 \right)$$

In this test, a typical cyanine dye such as those described in United States Patent 4,940,618 loses 100%. The results with the dyes useful in the invention are shown in the table 3 below:

Table 3

| Stabilizer | %Optical Density Loss in 16 Days with 50 Klux Light Exposure |
|---|---|
| None | 100.0 |
| Comparative Stabilizer | 100.0 |
| S-1 | 63.3 |
| S-2 | 52.9 |
| S-3 | 63.4 |
| S-4 | 21.6 |
| S-6 | 32.3 |

## Claims

1. A composition comprising a cyanine infrared absorbing dye and a nitrosonaphthol or nitrosophenol ferrous complex associated therewith.

2. The composition of Claim 1 wherein said nitrosonaphthol or nitrosophenol ferrous complex has the following formula:

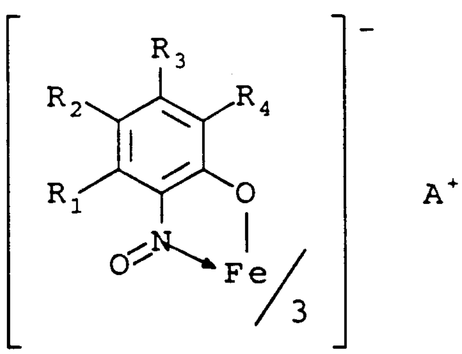

wherein:

wherein each of $R_1$-$R_4$ independently represents hydrogen; alkyl or alkoxy having from 1 to 4 carbon atoms; acetamido; nitro; sulfo; or, taken together with an adjacent R group represents the atoms necessary to complete a fused, substituted or unsubstituted aromatic ring; with the proviso that all R groups can not be hydrogen at the same time; and

A represents a cation.

3. The composition of Claim 2 wherein A represents tetraalkyl ammonium, $R_1$ taken together with $R_2$ represent the atoms necessary to provide a fused naphthol ring, and $R_4$ represents methoxy or acetamido.

4. The composition of Claim 2 wherein A represents tetraalkyl ammonium, and either $R_1$-$R_2$ or $R_3$-$R_4$ represent the atoms necessary to provide a fused naphthol ring.

5. The composition of Claim 1 wherein said nitrosonaphthol or nitrosophenol ferrous complex is the counter ion for said cyanine dye.

6. An optical recording element comprising a support having thereon a dye layer, said layer comprising a cyanine infrared absorbing dye and a nitrosonaphthol or nitrosophenol ferrous complex associated

therewith.

**7.** An optical recording element according to claim 6 which further has a reflective layer on said dye layer.

**8.** An optical recording element according to claim 6 wherein said cyanine infrared absorbing dye is selected from:

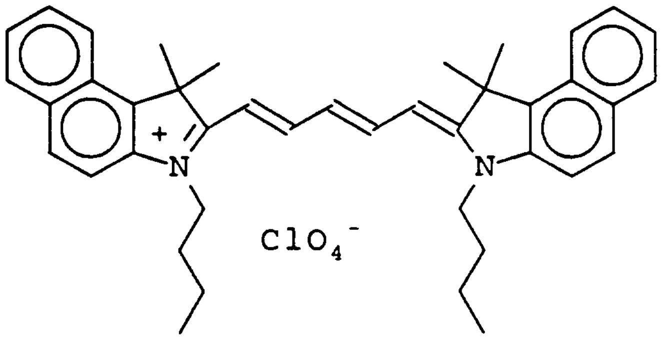

and

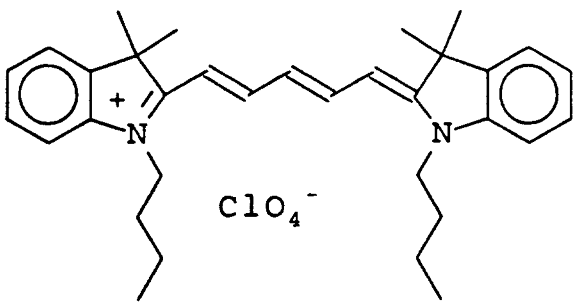

**9.** A thermal dye transfer image donor element comprising a support having thereon a layer comprising an image dye, a binder and a cyanine infrared absorbing dye and a nitrosonaphthol or nitrosophenol ferrous complex associated therewith.

**10.** A process of forming a laser-induced thermal dye transfer image comprising the steps of:

a) contacting at least one dye-donor element comprising a support having thereon a dye layer comprising an image dye in a polymeric binder having an infrared absorbing material associated therewith, with a dye-receiving element comprising a support having thereon a polymeric dye image-receiving layer;

b) imagewise-heating the dye-donor element by means of a laser; and

c) transferring a dye image to the dye-receiving element to form the laser-induced thermal dye transfer image,

and wherein the dye-donor element contains a nitrosonaphthol or nitrosophenol ferrous complex

**Patentansprüche**

**1.** Zusammensetzung mit einem infrarote Strahlung absorbierenden Cyaninfarbstoff und einem Nitrosonaphthol- oder Nitrosophenol-Ferrokomplex, der mit dem Farbstoff assoziiert ist.

**2.** Zusammensetzung nach Anspruch 1, in der der Nitrosonaphthol- oder Nitrosophenol-Ferrokomplex die folgende Formel hat:

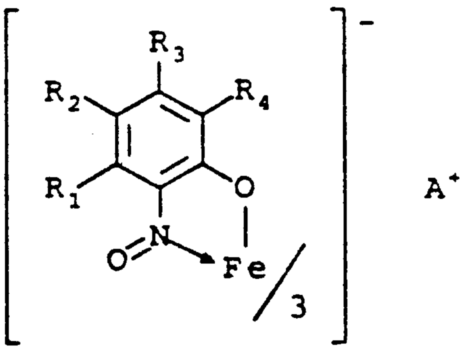

worin bedeuten:
$R_1$ - $R_4$ jeweils unabhängig voneinander Wasserstoff; Alkyl oder Alkoxy mit 1 bis 4 Kohlenstoffatomen; Acetamido; Nitro; Sulfo; oder gemeinsam mit einer benachbarten Gruppe R die Atome, die zur Vervollständigung eines ankondensierten, substituierten oder unsubstituierten aromatischen Ringes erforderlich sind; wobei gilt, daß sämtliche Gruppen R nicht gleichzeitig für Wasserstoff stehen können; und
A ein Kation.

**3.** Zusammensetzung nach Anspruch 2, worin A steht für Tetraalkylammonium, $R_1$ gemeinsam mit $R_2$ für die Atome, die zur Vervollständigung eines ankondensierten Naphtholringes erforderlich sind, und worin $R_4$ für Methoxy oder Acetamido steht.

**4.** Zusammensetzung nach Anspruch 2, in der A für Tetraalkylammonium steht und entweder $R_1$ - $R_2$ oder $R_3$ - $R_4$ die Atome darstellen, die zur Bildung eines ankondensierten Naphtholringes erforderlich sind.

**5.** Zusammensetzung nach Anspruch 1, in der der Nitrosonaphthol- oder Nitrosophenol-Ferrokomplex das Gegenion für den Cyaninfarbstoff ist.

**6.** Optisches Aufzeichnungselement mit einem Träger, auf dem sich eine Farbstoffschicht befindet, wobei die Schicht einen infrarote Strahlung absorbierenden Cyaninfarbstoff enthält sowie einen Nitrosonaphthol- oder Nitrosophenol-Ferrokomplex, der mit dem Farbstoff assoziiert ist.

**7.** Optisches Aufzeichnungselement nach Anspruch 6, das ferner eine reflektierende Schicht auf der Farbstoffschicht aufweist.

**8.** Optisches Aufzeichnungselement nach Anspruch 6, in dem der infrarote Strahlung absorbierende Cyaninfarbstoff ausgewählt ist aus:

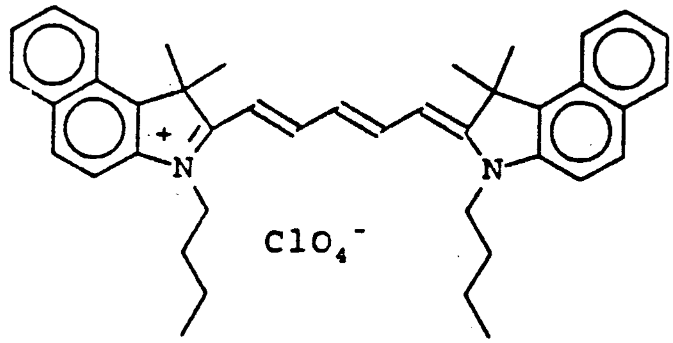

und

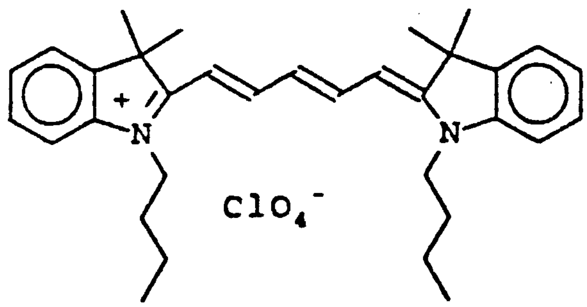

**9.** Donorelement für die thermische Farbstoffübertragung mit einem Träger, auf dem sich eine Schicht befindet mit einem Bildfarbstoff, einem Bindemittel und einem infrarote Strahlung absorbierenden Cyaninfarbstoff sowie einem Nitrosonaphthol- oder Nitrosophenol-Ferrokomplex, der mit dem Farbstoff assoziiert ist.

**10.** Verfahren zur Herstellung eines Laser-induzierten thermischen Farbstoff-Übertragungsbildes mit den Stufen:

a) Kontaktieren mindestens eines Farbstoff-Donorelementes mit einem Träger, auf dem sich eine Farbstoffschicht befindet mit einem Bildfarbstoff in einem polymeren Bindemittel und einem infrarote Strahlung absorbierenden Material, das mit dem Farbstoff assoziiert ist, mit einem Farbstoff-Empfangselement mit einem Träger, auf dem sich eine polymere Farbbild-Empfangsschicht befindet;

b) bildweises Erhitzen des Farbstoff-Donorelementes mittels eines Lasers; und

c) Übertragen eines Farbstoffbildes auf das Farbstoff-Empfangselement unter Erzeugung des Laser-induzierten thermischen Farbstoff-Übertragungsbildes,

wobei das Farbstoff-Donorelement einen Nitrosonaphthol- oder Nitrosophenol-Ferrokomplex enthält.

## Revendications

**1.** Composition comprenant un colorant cyanine absorbant dans l'infrarouge auquel est associé un complexe ferreux de nitrosonaphtol ou de nitrosophénol.

**2.** Composition selon la revendication 1, dans laquelle ledit complexe ferreux de nitrosonaphtol ou de nitrosophénol est représenté par la formule suivante :

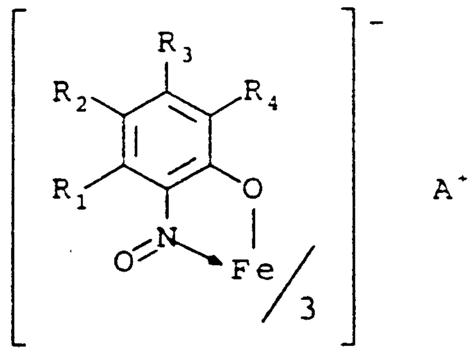

où :

chacun des groupes $R_1$-$R_4$ représente indépendamment l'hydrogène ; un groupe alkyle ou alcoxy de 1 à 4 atomes de carbone ; un groupe acétamido, nitro, sulfo ou, pris ensemble avec un groupe R adjacent, représente les atomes nécessaires pour compléter un cycle aromatique condensé substitué ou non ; à la condition que tous les groupes R ne puissent pas être l'hydrogène en même temps ; et A représente un cation.

**3.** Composition selon la revendication 2, dans laquelle A représente un tétraalkyl ammonium, $R_1$ pris ensemble avec $R_2$, représentent les atomes nécessaires pour former un cycle condensé naphtol et $R_4$ représente un radical méthoxy ou acétamido.

**4.** Composition selon la revendication 2, dans laquelle A représente un tétraalkyl ammonium, et soit $R_1$-$R_2$ soit $R_3$-$R_4$ représentent les atomes nécessaires pour former un cycle condensé naphtol.

**5.** Composition selon la revendication 1, dans laquelle ledit complexe ferreux de nitrosonaphtol ou de nitrosophénol est l'ion permettant d'équilibrer la charge dudit colorant cyanine.

**6.** Elément d'enregistrement optique comprenant un support recouvert d'une couche de colorant, ladite couche comprenant un colorant cyanine absorbant dans l'infrarouge auquel est associé un complexe ferreux de nitrosonaphtol ou de nitrosophénol.

**7.** Elément d'enregistrement optique selon la revendication 6, comprenant en outre une couche réfléchissante sur ladite couche de colorant.

**8.** Elément d'enregistrement optique selon la revendication 6, dans lequel ledit colorant cyanine absorbant dans l'infrarouge est choisi parmi :

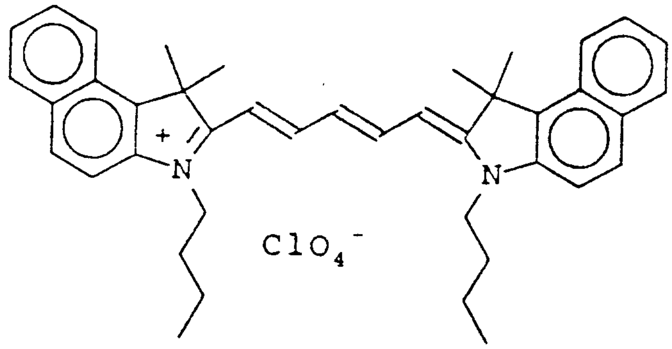

et

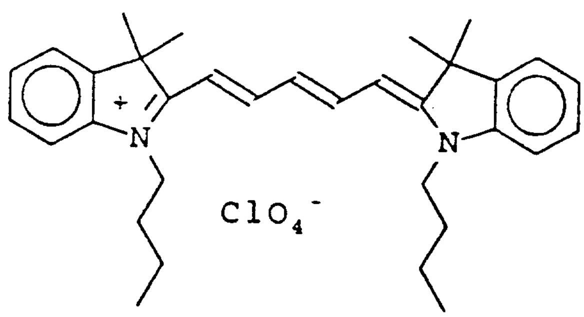

**9.** Elément donneur d'image par transfert thermique de colorant comprenant un support recouvert d'une couche comprenant un colorant d'image, un liant et un colorant cyanine absorbant dans l'infrarouge auquel est associé un complexe ferreux de nitrosonaphtol ou de nitrosophénol.

**10.** Procédé de formation d'une image par transfert thermique de colorant induit par laser comprenant les étapes suivantes :

a) mettre en contact au moins un élément donneur de colorant comprenant un support recouvert d'une couche de colorant contenant un colorant d'image dans un liant polymère à laquelle est associée une substance absorbant dans l'infrarouge avec un élément récepteur de colorant comprenant un support recouvert d'une couche réceptrice d'image de colorant polymère ;

b) chauffer conformément à l'image l'élément donneur de colorant au moyen d'un laser ; et

c) transférer une image de colorant sur l'élément récepteur de colorant pour former l'image par transfert de colorant par la chaleur induit par laser, et dans lequel l'élément donneur de colorant contient un complexe ferreux de nitrosonaphtol ou de nitrosophénol.